# EUROPÄISCHE PATENTSCHRIFT

(11) **EP 2 508 332 B1**
(45) Veröffentlichungstag und Bekanntmachung des Hinweises auf die Patenterteilung: **19.04.2017**
(21) Anmeldenummer: 12002336.1
(22) Anmeldetag: 30.03.2012
(51) Int. Cl.: B30B 9/32, B02C 19/00, B29B 17/00

(54) **Vorrichtung zum Kompaktieren von Behältnissen**
Device for compacting containers
Dispositif de compactage de récipients

(30) Priorität: 08.04.2011 DE 102011001925
(43) Veröffentlichungstag der Anmeldung: 10.10.2012
(73) Patentinhaber: Wincor Nixdorf International GmbH, 33106 Paderborn (DE)
(72) Erfinder: Springsguth, Stephan, 98704 Langewiesen (DE); Machold, Robert, 98693 Manebach (DE)
(74) Vertreter: Viering, Jentschura & Partner mbB Patent- und Rechtsanwälte

(56) Entgegenhaltungen:
- EP-A1- 1 445 023
- WO-A1-2008/113465
- DE-A1- 10 325 368
- DE-A1-102006 036 145
- DE-B3- 10 247 281
- DE-U1-202008 012 248
- DE-U1-202009 016 107
- US-A- 4 925 117
- US-A1- 2005 263 633
- US-A1- 2009 078 803
- US-B1- 6 402 070

## Beschreibung

Die Erfindung betrifft eine Vorrichtung zum Kompaktieren von Behältnissen, insbesondere von Einweggetränkeverpackungen, enthaltend einen um eine Körperlängsachse drehbar angeordneten, antreibbaren Walzenkörper mit radial hervorstehenden Elementen und enthaltend einen dem Walzenkörper zugeordneten Gegenkörper mit Ausnehmungen, die derart angeordnet und gestaltet sind, dass die hervorstehenden Elemente bei Rotation des Walzenkörpers um die Körperlängssachse zeitweise zumindest abschnittsweise in die Ausnehmungen eingreifen.

Aus der DE 10 2006 033 615 A1 ist eine Kompaktiereinheit für Einweggetränkeverpackung bekannt, die einen angetriebenen Walzenkörper mit hervorstehenden Elementen sowie einen mit dem Walzenkörper zusammenwirkenden Gegenkörper aufweist. Behältnisse, welche der Kompaktiereinheit zugeführt werden, werden zunächst von den hervorstehenden Elementen des Walzenkörpers erfasst und durch die Rotation des Walzenkörpers zwischen diesen und den Gegenkörper gezogen. Die hervorstehenden Elemente sind zu diesem Zweck als hakenförmige Schneiden ausgebildet. In der Kompaktiereinheit werden die Behältnisse geplättet. Zudem dringen die Schneiden in die Behältnisse ein und verformen bzw. lochen diese. Durch die Verformung bzw. Lochung werden die Wände der Behältnisse verwebt bzw. gecrimpt mit der Folge, dass die gepressten Behältnisse auch nach dem Kompaktieren ihre gepresste Form im Wesentlichen behalten und nicht in die Ausgangsform zurück expandieren.

Der Walzenkörper weist regelmäßig angeordnete, einheitliche, radial abragende Schneiden zum Einziehen und Verweben der Behältnisse auf. Bezüglich der Schneidengeometrie ist festzustellen, dass große, lange Schneiden einen sicheren und zuverlässigen Einzug der Behältnisse in die Kompaktiereinheit gewährleisten. Dem gegenüber verbessern kleine Schneiden den Kompaktiergrad, da die Behältnisse beim Plätten weniger stark profiliert bzw. gebogen werden. Da die Schneiden des bekannten Walzenkörpers gleichartig ausgebildet sind, stellt die Wahl der Schneidengeometrie immer einen Kompromiss dar zwischen einem hohen Kompaktiergrad und einer hohen Einzugszuverlässigkeit. Dies führt nicht immer zu befriedigenden Ergebnissen.

Das Dokument US-A-2009/0078803 offenbart eine Vorrichtung gemäß dem Oberbegriff des Anspruchs 1.

Aufgabe der vorliegenden Erfindung ist es daher, eine Vorrichtung zum Kompaktieren von Behältnissen derart weiterzubilden, dass der Kompaktiergrad und die Einzugszuverlässigkeit gleichermaßen verbessert werden.

Zur Lösung der Aufgabe ist die Erfindung in Verbindung mit dem Oberbegriff des Patentanspruchs 1, dadurch gekennzeichnet, dass in dem seitlichen Bereich (11) wenigstens zwei Größen von hervorstehenden Elementen (6) in Umfangsrichtung verteilt angeordnet sind.

Der besondere Vorteil der Erfindung besteht darin, dass durch das Vorsehen der vorstehenden Elemente unterschiedlicher Größe zum einen eine gute Einzugssicherheit gewährleistet und zum anderen der Kompaktiergrad verbessert wird. Die Einzugssicherheit wird insbesondere durch das Vorsehen großer, das heißt, weit in radialer Richtung hervorstehender Elemente bewirkt. Die Größe kann insbesondere über ein Radialmaß bestimmt werden, welches eine radiale Höhe der hervorstehende Elemente bemisst. Der Kompaktiergrad wird verbessert, indem zusätzlich kleine, das heißt, radial weniger weit hervorstehende Elemente vorgesehen sind, welche die Behältnisse während des Kompaktierens weniger stark durchstechen bzw. verformen und besser plätten.

Der Gegenkörper kann beispielsweise als eine Gegenplatte oder als eine Gegenwalze ausgebildet sein. Die Gegenwalze kann ihrerseits mit oder ohne hervorstehende Elemente ausgebildet sein.

Neben der Größe kann auch die Kontur der hervorstehenden Elemente, das heißt, ihr Profil in einem Walzenquerschnitt variiert und hinsichtlich der Einzugssicherheit bzw. des Kompaktiergrads optimiert werden.

Nach einer bevorzugten Ausführungsform der Erfindung ragen die hervorstehenden Elemente in einem mittleren Bereich des Walzenkörpers radial weiter hervor als in den angrenzenden seitlichen Bereichen des Walzenkörpers. Indem die hervorstehenden Elemente in einem mittleren Bereich des Walzenkörpers radial weiter abragen, das heißt, größer ausgebildet sind als in den angrenzenden seitlichen Bereichen, kann insbesondere ein typischerweise mittig vorgesehener Flaschenhals des Leergutbehältnisses zuverlässig gegriffen und das Leergutbehältnis eingezogen werden. In den seitlichen Bereichen sind die hervorstehenden Elemente kleiner ausgebildet. Dieses ist besonders vorteilhaft, da die Behältnisse in den seitlichen Bereichen am stärksten verformt werden müssen. Die mittige Anordnung großer hervorstehender Elemente und die Anordnung von kleinen hervorstehenden Elementen beidseits daneben führt somit zu einem besonders guten Kompaktierergebnis bei gleichzeitiger hoher Einzugssicherheit.

Nach einer Weiterbildung der Erfindung sind die hervorstehenden Elemente in dem mittleren Bereich in Umfangsrichtung des Walzenkörpers weiter beabstandet zueinander angeordnet als in den seitlichen Bereichen. Vorteilhaft führt dies dazu, dass die Einzugssicherheit erhöht und der Kompaktiergrad verbessert werden.

Nach einer Weiterbildung der Erfindung weist der Walzenkörper in Richtung der Körperlängsachse beabstandet zueinander eine Mehrzahl von die hervorstehenden Elemente aufweisenden Scheibensegmenten und zwischen den Scheibensegmenten angeordnete Abstandssegmente auf. Eine Radialabmessung der Abstandselemente ist hierbei kleiner als eine Radialabmessung der Scheibensegmente mit den hervorstehenden Elementen. Durch die segmentierte Ausbildung des Walzenskörpers ist eine besonders enge räumliche Zuordnung von Walzenkörper und Gegenkörper möglich, und die Gefahr einer Funktionsstörung beim Kompaktieren reduziert sich. Zugleich können besonders gute Kompaktiergrade realisiert werden.

Nach einer Weiterbildung der Erfindung weist der Walzenkörper unterschiedliche Typen von Scheibensegmenten auf. Ein erster Typ von Scheibensegment umfasst einen ersten Typ von hervorstehenden Elementen und ein zweiter Typ von Scheibensegmenten wenigstens einen zweiten Typ von hervorstehenden Elementen. Vorteilhaft können Scheibensegmente in unterschiedlicher Weise zusammen gefügt werden zur Herstellung unterschiedlicher Typen von Walzenkörpern für unterschiedliche Kompaktiereinheiten. Beispielsweise können die Dimensionen des Walzenkörpers, insbesondere die Breite des mittleren Bereiches beziehungsweise der seitlichen Bereiche in einfacher Weise variiert werden. Zudem können einzelne Scheibensegmente während der Wartung der Kompaktiereinheit ausgetauscht werden. Die Typen von hervorstehenden Elementen können sich beispielsweise durch ihre Größe und/oder Kontur unterscheiden.

Nach einer Weiterbildung der Erfindung ist der erste Typ der Scheibensegmente in dem mittleren Bereich und der zweite Typ von Scheibensegmenten in den seitlichen Bereichen angeordnet. Vorteilhaft gelingt es hierdurch, dass eine hohe Einzugssicherheit und ein guter Kompaktiergrad bei einem Walzenkörper in Modulbauweise realisiert werden.

Weitere Vorteile der Erfindungen ergeben sich aus den weiteren Unteransprüchen.

Ausführungsbeispiele der Erfindungen werden nachfolgend anhand der Zeichnungen näher erläutert.

Es zeigen:

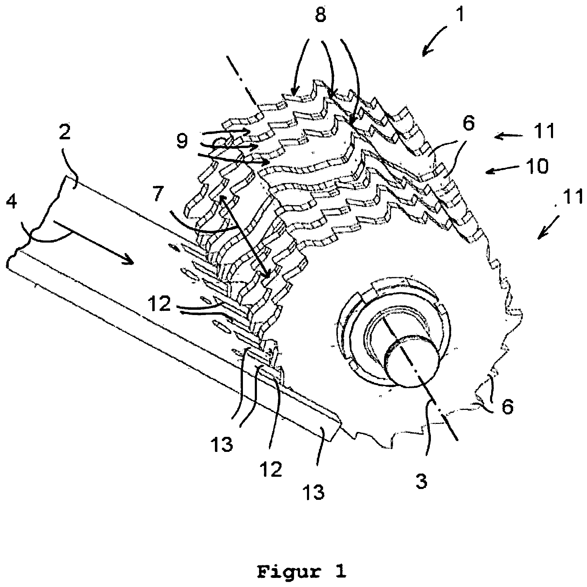

- Figur 1: eine perspektivische Seitenansicht einer erfindungsgemäßen Vorrichtung zum Kompaktieren von Behältnissen mit einer Kompaktierwalze,

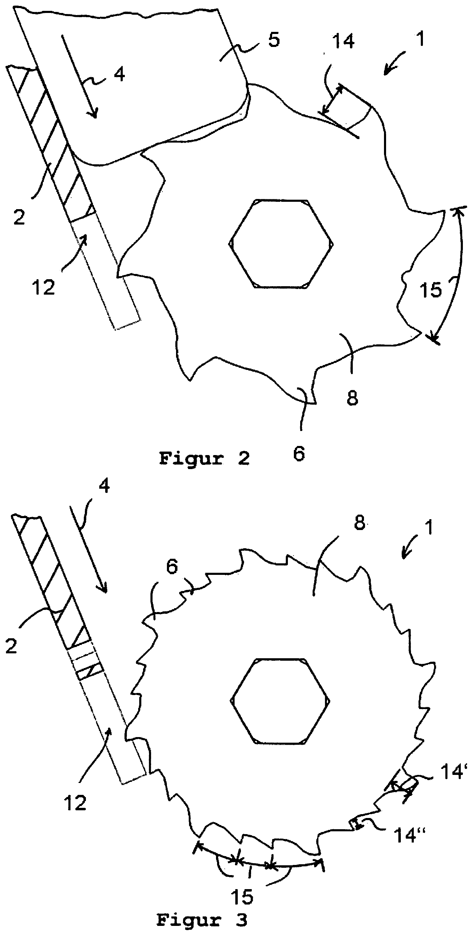

- Figur 2: ein Querschnitt durch die Kompaktierwalze nach Figur 1 in einem mittleren Bereich und
- Figur 3: ein Querschnitt durch die Kompaktierwalze nach Figur 1 in einem seitlichen Bereich.

Eine Vorrichtung zum Kompaktieren von Behältnissen 5, insbesondere Einweggetränkeflaschen aus Plastik und Getränkedosen, besteht im Wesentlichen aus einem Walzenkörper 1 und aus einem dem Walzenkörper 1 räumlich zugeordneten Gegenkörper 2. Der Walzenkörper 1 ist um eine Körperlängsachse 3 drehbar gehalten und kann mittels einer nicht dargestellten Antriebseinheit im Gegenuhrzeigersinn um die Körperlängsachse 3 rotiert werden. Durch die Rotation des Walzenkörpers wird ein in eine Zuführrichtung 4 zugeführtes Behältnis 5 zwischen den Walzenkörper 1 und den Gegenkörper 2 gezogen.

Derartige Kompaktiereinheiten werden beispielsweise in Leergut-Rücknahmeautomaten eingesetzt. Sie dienen dazu, Behältnisse 5 nach der Rücknahme in ihrem Volumen zu reduzieren, so dass der Platzbedarf für die Bevorratung zurückgenommener Einweggetränkeverpackungen reduziert wird. Zugleich wird ein möglicher Pfandwert des Behältnisses 5 durch das Kompaktieren entwertet, mit der Folge, dass ein einmal zurückgenommenes Behältnis 5 nicht erneut zurückgegeben werden kann. Insofern dient das Kompaktieren der Behältnisse 5 auch dazu, Missbrauch in Form einer mehrmaligen Auszahlung des Pfandwerts vorzubeugen.

Der um die Körperlängsachse 3 drehbar gelagerte Walzenkörper 2 weist eine Vielzahl von radial abragenden hervorstehenden Elementen 6 auf. Die hervorstehenden Elemente 6 sind nach Art von hakenförmigen Schneiden bzw. Zähnen gebildet. Die hervorstehenden Elemente bzw. Schneiden 6 sind an in Körperlängsrichtung 7 beabstandet zueinander angeordnet Scheibensegmenten 8 vorgesehen. Zwischen den Scheibensegmenten 8 sind nicht dargestellte Abstandssegmente angeordnet. Da eine Radialabmessung der Abstandssegmente geringer ist als eine Radialabmessung der Scheibensegmente 8, sind zwischen den Scheibensegmenten 8 Freiräume 9 gebildet.

Der Walzenkörper 1 weist - in Körperlängsrichtung 7 gesehen - einen mittleren Bereich 10 und zwei sich an den mittleren Bereich 10 anschließende seitliche Bereiche 11 auf. In dem mittleren Bereich 10 sind Scheibensegmente 8 vorgesehen, die nach Art eines ersten Typs gebildet sind. In den seitlichen Bereichen 11 sind jeweils Scheibensegmente 8 eines zweiten Typs vorgesehen.

Die Scheibensegmente 8 des ersten Typs weisen radial weit abragende, das heißt, große Schneiden 6 mit einem großen Radialmaß 14 auf, die in Umfangsrichtung einen großen Abstand 15 zueinander besitzen. Die Scheibensegmente 8 nach dem zweiten Typ weisen eine Mehrzahl von weniger stark abragenden Schneiden 6 auf, die in Umfangsrichtung einen weniger großen Abstand 15 aufweisen. Zudem weisen die Scheibensegmente 8 nach dem zweiten Typ unterschiedliche Schneiden 6 auf. Auf eine Schneide 6 mittlerer Größe mit einem mittelgroßen Radialmaß 14' folgen Schneiden kleiner Größe mit einem kleinen Radialmaß 14", dann wieder eine Schneide mittlerer Größe gefolgt von Schneiden kleiner Größe usw. Insgesamt wird hierdurch ein Walzenkörper 1 gebildet, der in dem mittleren Bereich 10 radial weit abragende Schneiden 6 und in den seitlichen Bereichen 11 weniger stark abragende Schneiden 6 kleiner und mittlerer Größe aufweist. Der Abstand 15 der Schneiden 6 ist in dem seitlichen Bereich 11 kleiner als in dem mittleren Bereich 10. Die Schneiden 6 können entlang des Umfangs - wie im mittleren Bereich 10 - zumindest annähernd gleichmäßig oder - wie in den seitlichen Bereichen 11 - ungleichmäßig verteilt angeordnet sein.

Dem Walzenkörper 1 ist der Gegenkörper 2 räumlich zugeordnet. Der Gegenkörper 2 ist typischerweise als flacher Gegenkörper 2 ausgebildet mit fingerartigen Ausnehmungen 12, die derart angeordnet und gestaltet sind, dass die Schneiden 6 bei Rotation des Walzenkörpers 1 um die Körperlängsachse 3 zeitweise zumindest abschnittsweise in die Ausnehmungen 12 eingreifen. Es sind aber auch gekrümmte oder gewinkelte Formen des Gegenkörpers 2 zulässig. Stege 13 zwischen benachbarten Ausnehmungen 12 sind so gestaltet, dass sie in die Freiräume 9 des Walzenkörpers 1 hineinragen. Die Stege 18 erstrecken sich ebenfalls in die Zuführrichtung 4 und stützen die Behältnisse 5 beim Kompaktieren.

Zum Kompaktieren des Behältnisses 5 wird dieses in die Zuführrichtung 4 zugeführt. Der Gegenkörper 2 ist hierbei nach Art einer Warenrutsche flach ausgebildet, so dass das Behältnis 5 während des Zuführens an den Gegenkörper 2 abgestützt ist. Gelangt das Behältnis 5 in den Wirkbereich des Walzenkörpers 1, wird es zunächst vorwiegend von dem im mittleren Bereich 10 angeordneten großen Schneiden 6 gegriffen und zwischen Walzenkörper 1 und Gegenkörper 2 eingezogen. Zwischen Walzenkörper 1 und Gegenkörper 2 wird das Behältnis 5 geplättet. Zusätzlich dringen die Schneiden 6 durch die Wandung des Behältnisses 5 und lochen dieses. Durch die Lochung wird das Behältnis 5 so verwebt bzw. gecrimpt, dass das geplättete Behältnis 5 dauerhaft in der gepressten Form verbleibt. Nach der dargestellten Ausführungsform der Kompaktiereinheit werden die langen Schneiden 6 in dem mittleren Abschnitt 10 des Walzenkörpers 1 angeordnet, wo beim Längseinzug des Behältnisses 5 typischerweise ein Flaschenhals eingezogen wird und das Behältnis 5 ohnehin die flachste Krümmung aufweist. Die flachen Schneiden 6 schließen sich beidseits des mittleren Bereichs 10 in den seitlichen Bereichen 11 an, in denen das Behältnis 5 am stärksten verformt werden muss. Die flacheren Schneiden 6 in den seitlichen Bereichen 11 dringen weniger tief in das Behältnis 5 ein bzw. schneiden kleinere Löcher in das Behältnis 5. Das Behältnis 5 wird demzufolge bei im Wesentlichen gleicher Plättung weniger stark gebogen. Die Kombination dieser beiden Schneidenformen auf einem gemeinsamen Walzenkörper 1 führt zu einem sehr guten Kompaktierergebnis bei gleichzeitig hoher Einzugsicherheit.

Nach einer weiteren nicht dargestellten Ausführungsform der Erfindung kann auf die segmentierte Ausbildung des Walzenkörpers 1 mit Scheibenelementen 8 und Abstandssystem verzichtet werden.

Gleiche Bauteile und Bauteilfunktionen sind durch gleiche Bezugszeichen gekennzeichnet.

### Bezugszeichenliste

- 1: Walzenkörper
- 2: Gegenkörper
- 3: Körperlängsachse
- 4: Zuführrichtung
- 5: Behältnis
- 6: hervorstehende Elemente
- 7: Körperlängsrichtung
- 8: Scheibensegment
- 9: Freiraum
- 10: mittlerer Bereich
- 11: seitlicher Bereich
- 12: Ausnehmung
- 13: Steg
- 14, 14', 14": Radialmaß
- 15: Abstand

## Patentansprüche

1. Vorrichtung zum Kompaktieren von Behältnissen, insbesondere von Einweggetränkeverpackungen, enthaltend einen um eine Körperlängsachse drehbar angeordneten, antreibbaren Walzenkörper (1) mit radial hervorstehenden Elementen (6) und enthaltend einen dem Walzenkörper zugeordneten Gegenkörper (2) mit Ausnehmungen, die derart angeordnet und gestaltet sind, dass die hervorstehenden Elemente (6) bei Rotation des Walzenkörpers um die Körperlängssachse zeitweise zumindest abschnittsweise in die Ausnehmungen (12) eingreifen wobei hervorstehende Elemente (6) unterschiedlicher Größe und/oder unterschiedlicher Kontur vorgesehen sind wobei der Walzenkörper (1) in Körperlängsrichtung (7) gesehen einen mittleren Bereich (10) und zwei sich an den mittleren Bereich (10) sich anschließende seitliche Bereiche (11) aufweist, wobei die hervorstehenden Elemente (6) in dem mittleren Bereich (10) des Walzenkörpers (1) radial weiter hervorragen als in den benachbart zu dem mittleren Bereich (10) angeordneten seitlichen Bereichen (11) des Walzenkörpers (1), **dadurch gekennzeichnet dass** in dem seitlichen Bereich (11) wenigstens zwei Größen von hervorstehenden Elementen (6) in Umfangsrichtung verteilt angeordnet sind.

2. Vorrichtung nach Anspruch 1, **dadurch gekennzeichnet, dass** die hervorstehenden Elemente (6) in dem mittleren Bereich (10) in Umfangsrichtung des Walzenkörpers (1) weiter beabstandet zueinander angeordnet sind als in den seitlichen Bereichen (11).

3. Vorrichtung nach Anspruch 1 oder 2, **dadurch gekennzeichnet, dass** der Walzenkörper (1) in Körperlängsrichtung (7) eine Mehrzahl von beabstandet zueinander angeordneten, die hervorstehenden Elemente (6) aufweisenden Scheibensegmente (8) und zwischen den Scheibensegmenten (8) angeordnete Abstandssegmente aufweist, wobei die Abstandssegmente eine kleinere Radialabmessung aufweisen als die Scheibensegmente (8) mit den hervorstehenden Elementen (6).

4. Vorrichtung nach Anspruch 3, **dadurch gekennzeichnet, dass** ein erster Typ von Scheibensegmenten (8) einen ersten Typ von hervorstehenden Elementen (6) und ein zweiter Typ von Scheibensegmenten (8) wenigstens einen zweiten Typ von hervorstehenden Elementen (6) aufweist.

5. Vorrichtung nach Anspruch 4, **dadurch gekennzeichnet, dass** der zweite Typ von Scheibensegmenten (8) zusätzlich einen dritten Typ von hervorstehenden Elementen (6) aufweist, wobei der zweite Typ und der dritte Typ von hervorstehenden Elementen (6) in Umfangsrichtung verteilt angeordnet sind.

6. Vorrichtung nach Anspruch 4 oder 5, **dadurch gekennzeichnet, dass** der erste Typ von Scheibensegmenten (8) in dem mittleren Bereich (10) und der zweite Typ von Scheibensegmenten (8) in den seitlichen Bereichen (11) angeordnet sind.

7. Vorrichtung nach einem der Ansprüche 1 bis 6, **dadurch gekennzeichnet, dass** die hervorstehenden Elemente (6) als hakenförmige Schneiden ausgebildet sind.

8. Vorrichtung nach einem der Ansprüche 1 bis 7, **dadurch gekennzeichnet, dass** der Gegenkörper (2) als ein flacher und in eine Zuführrichtung (4) der Behältnisse (5) erstreckter Gegenkörper (2) ausgebildet ist.

## Claims

1. Apparatus for compacting containers, in particular disposable beverage containers, comprising a driveable roller body (1) which is arranged in a rotatable manner about a longitudinal body axis and has radially projecting elements (6), and also comprising an abutment body (2), which is assigned to the roller body and has recesses, which are arranged and configured such that, as the roller body rotates about the longitudinal body axis, the projecting elements (6) engage temporarily, at least in part, in the recesses (12), wherein projecting elements (6) of different sizes and/or different contours are provided, wherein the roller body (1), as seen in the longitudinal direction (7) of the body, has a central region (10) and two lateral regions (11), which adjoin the central region (10), wherein the projecting elements (6) in the central region (10) of the roller body (1) project further in radial direction than is the case in the lateral regions (11) of the roller body (1), said lateral regions being arranged adjacent to the central region (10), **characterized in that** at least two sizes of projecting elements (6) are distributed in the circumferential direction in the lateral region (11).

2. Apparatus according to Claim 1, **characterized in that** the projecting elements (6) in the central region (10) are spaced apart from one another to a greater extent in the circumferential direction of the roller body (1) than is the case in the lateral regions (11).

3. Apparatus according to Claim 1 or 2, **characterized in that** the roller body (1), as seen in the longitudinal direction (7) of the body, has a plurality of spaced-apart disc segments (8), which contain the projecting elements (6), and spacer segments, which are arranged between the disc segments (8), wherein the spacer segments have a smaller radial dimension than the disc segments (8) with the projecting elements (6).

4. Apparatus according to Claim 3, **characterized in that** a first type of disc segment (8) has a first type of projecting element (6) and a second type of disc segment (8) has at least one second type of projecting element (6).

5. Apparatus according to Claim 4, **characterized in that** the second type of disc segment (8), in addition has a third type of projecting element (6), wherein the second type and the third type of projecting element (6) are distributed in the circumferential direction.

6. Apparatus according to Claim 4 or 5, **characterized in that** the first type of disc segment (8) is arranged in the central region (10) and the second type of disc segment (8) is arranged in the lateral regions (11).

7. Apparatus according to one of Claims 1 to 6, **characterized in that** the projecting elements (6) are designed in the form of hook-like cutters.

8. Apparatus according to one of Claim 1 to 7, **characterized in that** the abutment body (2) is designed in the form of a flat abutment body (2) which extends in a feed direction (4) of the containers (5).

## Revendications

1. Dispositif de compactage de récipients, en particulier d'emballages de boissons jetables, contenant un corps de rouleau (1) pouvant être entraîné, disposé de manière à pouvoir tourner autour d'un axe longitudinal du corps, avec des éléments saillant radialement (6) et contenant un corps conjugué (2) associé au corps de rouleau, avec des évidements qui sont disposés et configurés de telle sorte que les éléments saillants (6), lors de la rotation du corps de rouleau autour de l'axe longitudinal du corps, s'engagent temporairement au moins en partie dans les évidements (12), des éléments saillants (6) de tailles différentes et/ou de contours différents étant prévus, le corps de rouleau (1), vu dans la direction longitudinale du corps (7), présentant une région centrale (10) et deux régions latérales (11) se raccordant à la région centrale (10),
les éléments saillants (6) faisant saillie radialement dans la région centrale (10) du corps de rouleau (1) plus que dans les régions latérales (11) adjacentes à la région centrale (10) du corps de rouleau (1), **caractérisé en ce**
**qu'**au moins deux grandeurs d'éléments saillants (6) sont disposées de manière répartie dans la direction périphérique dans la région latérale (11).

2. Dispositif selon la revendication 1, **caractérisé en ce que** les éléments saillants (6) dans la direction périphérique du corps de rouleau (1) sont disposés à une plus grande distance les uns des autres dans la région centrale (10) que dans les régions latérales (11).

3. Dispositif selon la revendication 1 ou 2, **caractérisé en ce que** le corps de rouleau (1), dans la direction longitudinale du corps (7), présente une pluralité de segments de disques (8) disposés à distance les uns des autres, présentant les éléments saillants (6), et une pluralité d'éléments d'espacement disposés entre les segments de disques (8), les segments d'espacement présentant une plus petite dimension radiale que les segments de disques (8) avec les éléments saillants (6).

4. Dispositif selon la revendication 3, **caractérisé en ce que** des segments de disques (8) d'un premier type présentent des éléments saillants (6) d'un premier type, et des segments de disques (8) d'un deuxième type présentent des éléments saillants (6) d'au moins un deuxième type.

5. Dispositif selon la revendication 4, **caractérisé en ce que** les segments de disques (8) du deuxième type présentent en outre des éléments saillants (6) d'un troisième type, les éléments saillants (6) du deuxième type et du troisième type étant disposés de manière répartie dans la direction périphérique.

6. Dispositif selon la revendication 4 ou 5, **caractérisé en ce que** les segments de disques (8) du premier type sont disposés dans la région centrale (10) et les segments de disques (8) du deuxième type sont disposés dans les régions latérales (11).

7. Dispositif selon l'une quelconque des revendications 1 à 6, **caractérisé en ce que** les éléments saillants (6) sont réalisés sous forme d'arêtes en forme de crochet.

8. Dispositif selon l'une quelconque des revendications 1 à 7, **caractérisé en ce que** le corps conjugué (2) est réalisé sous forme de corps conjugué plat (2) et s'étendant dans une direction d'alimentation (4) des récipients (5).
